# EUROPÄISCHE PATENTSCHRIFT

(11) **EP 3 823 898 B1**
(45) Veröffentlichungstag und Bekanntmachung des Hinweises auf die Patenterteilung: **06.09.2023**
(21) Anmeldenummer: 19745047.1
(22) Anmeldetag: 16.07.2019
(51) Int. Cl.: B64D 11/00, B60N 3/00, B60N 2/22, B60N 2/42, B60N 2/00, B60N 2/90, B64D 11/06

(54) **FLUGZEUGSITZVORRICHTUNG**
AIRCRAFT SEAT DEVICE
DISPOSITIF DE SIÈGE D'AVION

(30) Priorität: 16.07.2018 DE 102018117104
(43) Veröffentlichungstag der Anmeldung: 26.05.2021
(73) Patentinhaber: Recaro Aircraft Seating GmbH & Co. KG, 74523 Schwäbisch Hall (DE)
(72) Erfinder: HENNRICH, Christoph, 74523 Schwäbisch Hall (DE); STACHEL, Alfons, 74538 Rosengarten (DE); MALEKOVIC, Sinisa, 74523 Schwäbisch Hall (DE); KLAUS, Tim, 74523 Schwäbisch Hall (DE)
(74) Vertreter: Daub, Thomas
(86) Internationale Anmeldenummer: PCT/EP2019/000217
(87) Internationale Veröffentlichungsnummer: WO 2020/015849

(56) Entgegenhaltungen:
- EP-A1- 2 881 325
- CA-A1- 2 617 626
- DE-B4-112006 002 942
- FR-A1- 3 034 055
- US-A1- 2009 218 859
- US-A1- 2009 224 584
- US-A1- 2009 224 587
- US-A1- 2012 267 928

## Beschreibung

### Stand der Technik

Die Druckschriften US 2009/218859 A1, CA 2 617 626 A1, FR 3 034 055 A1, US 2009/224587 A1, US 2009/224584 A1, US 2012/267928 A1 und DE 11 2006 002942 B4 offenbaren Sitzelemente, die ein ansteuerbares Formgedächtniselement beinhalten, aber diese Druckschriften offenbaren bereits kein als Esstisch ausgebildetes Flugzeugsitzelement.

Die Druckschrift EP 2 881 325 A1 offenbart eine Flugzeugsitzvorrichtung mit zumindest einer Funktionseinheit, die in einem als Esstisch ausgebildeten Flugzeugsitzelement angeordnet ist, wenigstens ein ansteuerbares Formgedächtniselement umfasst und dazu vorgesehen ist, einen Gegenstand in einer Ausnehmung des als Esstisch ausgebildeten Flugzeugsitzelements zu fixieren. Diese Druckschrift lehrt jedoch keine Möglichkeit einer Verriegelung des als Esstisch ausgebildeten Flugzeugsitzelements mittels der Funktionseinheit.

Die Erfindung betrifft eine Flugzeugsitzvorrichtung nach dem Oberbegriff des Patentanspruchs 1.

Es ist bereits eine Flugzeugsitzvorrichtung mit zumindest einer Funktionseinheit, die zumindest zu einer Verriegelung, einer Steuerung und/oder einer Bewegung wenigstens eines Flugzeugsitzelements vorgesehen ist, vorgeschlagen worden, wobei die Funktionseinheit wenigstens ein ansteuerbares Formgedächtniselement umfasst. Die Funktionseinheit weist zumindest ein zwischen zumindest zwei Stellungen verfahrbares Verriegelungselement auf, das zumindest im Wesentlichen durch das wenigstens eine ansteuerbare Formgedächtniselement verstellbar ist, wobei das wenigstens eine Formgedächtniselement zur Verriegelung des als Esstisch ausgebildeten Flugzeugsitzelements vorgesehen ist.

Die Aufgabe der Erfindung besteht insbesondere darin, eine gattungsgemäße Vorrichtung mit verbesserten Eigenschaften hinsichtlich eines Komforts und einer Bedienbarkeit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzvorrichtung mit zumindest einer Funktionseinheit, die zumindest zu einer Verriegelung, einer Steuerung und/oder einer Bewegung wenigstens eines Flugzeugsitzelements vorgesehen ist.

Es wird vorgeschlagen, dass die die Funktionseinheit wenigstens ein ansteuerbares Formgedächtniselement umfasst. Unter einer "Flugzeugsitzvorrichtung" soll insbesondere eine Vorrichtung verstanden werden, die zumindest einen Teil eines Flugzeugsitzes oder eines Flugzeugsitzmoduls ausbildet. Unter einem "Flugzeugsitz" soll dabei insbesondere ein Sitz verstanden werden, der dazu vorgesehen ist, in einer Flugzeugkabine eines Flugzeugs auf einem Kabinenboden aufgeständert zu werden und auf dem ein Passagier während eines Fluges sitzen kann. Dabei weist der Flugzeugsitz einen Sitzboden und eine mit dem Sitzboden gekoppelte Rückenlehne auf, wobei die Rückenlehne vorzugsweise verschwenkbar mit dem Sitzboden verbunden ist, wodurch der Flugzeugsitz vorzugsweise in unterschiedliche Funktionsstellungen bewegbar ist. Unter einem "Flugzeugsitzmodul" soll dabei insbesondere ein Modul mit einem Flugzeugsitz verstanden werden, das dazu vorgesehen ist, in einer Flugzeugkabine aufgeständert zu werden, beispielsweise ein Modul aus einem Flugzeugsitz mit wenigstens einer Konsole und einem Ottoman, die vorzugsweise einen zumindest teilweise abgetrennten Businessclass- oder Firstclass-Flugzeugsitzbereich ausbilden. Unter einer "Funktionseinheit" soll insbesondere eine Einheit des Flugzeugsitzes und /oder des Flugzeugsitzmoduls verstanden werden, die eine insbesondere dazu vorgesehen ist, ein Flugzeugelement zumindest teilweise zu steuern, zu bewegen oder verriegeln. Dabei ist eine Funktionseinheit vorzugsweise ein Teil des entsprechenden Flugzeugsitzelements, wie beispielsweise eine Verriegelungseinheit, eine Verstelleinheit, oder eine Bewegungseinheit. Unter "zur Steuerung" soll insbesondere zur Ausführung zumindest eines Teils einer Funktion einer Funktionseinheit verstanden werden, beispielsweise eine Ansteuerung eines Ventils, durch eine durch ein Formgedächtniselement ausgeführte Bewegung. Unter "zur Verriegelung" soll insbesondere zur formschlüssigen Arretierung eines Elements, insbesondere eines Flugzeugsitzelements in zumindest einer Stellung verstanden werden, wobei die formschlüssige Arretierung insbesondere durch eine Bewegung eines Formgedächtniselements hervorgerufen wird. Dabei ist es denkbar, dass das Formgedächtniselement selbst einen Formschluss mit einem korrespondierend ausgebildeten Element eingeht, oder, dass das Formschlusselement ein Verriegelungselement, wie beispielsweise einen Pin in eine Verriegelposition bewegt. Unter einem "Flugzeugsitzelement" soll dabei insbesondere ein Element eines Flugzeugsitzes oder eines Flugzeugsitzmoduls verstanden werden, das zur Benutzung durch einen Passagier während eines Fluges oder durch einen Mechaniker beispielsweise bei der Wartung verwendet werden kann. Dabei ist ein Flugzeugsitzelement beispielsweise als ein Monitor, als ein ausklappbarer Esstisch, als eine Sitzverriegelung, oder ein anderes dem Fachmann als sinnvoll erscheinendes Element des Flugzeugsitzes oder des Flugzeugsitzmoduls ausgebildet. Unter einem "ansteuerbaren Formgedächtniselement" soll insbesondere ein Element verstanden werden, das zumindest teilweise aus einem Formgedächtnismaterial, insbesondere einer Formgedächtnislegierung gebildet ist, das durch Ansteuerung mit einem Strom dazu vorgesehen ist, seine Form zu ändern, wobei das Formgedächtniselement dabei bei einer gleichen Ansteuerung mit Strom immer dieselbe Position einnimmt. Unter einer "Formgedächtnislegierung" soll dabei insbesondere eine Metalllegierung verstanden werden, die in zwei unterschiedlichen Gitterstrukturen existieren kann, wodurch sich ein Element aus einer Formgedächtnislegierung nach einer starken Verformung durch eine Einwirkung insbesondere von Wärme ohne weiteren Einfluss von außen wieder in ihre frühere Formgebung zurück verformt. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch eine erfindungsgemäße Ausgestaltung kann eine besonders einfache und kostengünstige Vorrichtung zur Steuerung, Verriegelung oder Bewegung eines Flugzeugsitzelements erreicht werden.

Weiter wird vorgeschlagen, dass die Funktionseinheit zumindest einen Teil einer Bildschirmverstelleinheit ausbildet. Unter einer "Bildschirmverstelleinheit" soll insbesondere eine Einheit verstanden werden, die dazu vorgesehen ist, eine Ausrichtung eines Bildschirms anhand eines Bedienerwunsches zu verstellen. Dadurch kann eine Vorrichtung zur Verstellung eines Bildschirms besonders einfach ausgeführt werden.

Ferner wird vorgeschlagen, dass die Funktionseinheit wenigstens ein Verstellelement aufweist, das zumindest im Wesentlichen durch das wenigstens eine ansteuerbare Formgedächtniselement verstellbar ist. Unter einem "Verstellelement" soll insbesondere ein Element verstanden werden, das von einer Bewegung des Formgedächtniselements verstellt, insbesondere bewegt wird und mit dem Flugzeugsitzelement gekoppelt ist, um so eine Bewegung des wenigstens einen Formgedächtniselements an das Flugzeugsitzelement zu übertragen. Dadurch kann eine Bewegung eines Formgedächtniselements besonders einfach an das entsprechende Flugzeugsitzelement übertragen werden.

Es wird weiterhin vorgeschlagen, dass die Funktionseinheit zumindest einen Teil einer Verriegelungseinheit ausbildet. Unter einer "Verriegelungseinheit" soll insbesondere eine Einheit verstanden werden, die ein Flugzeugsitzelement in zumindest einem Betriebszustand in einer definierten Position, vorzugsweise einer Verstauposition verriegelt. Dadurch kann eine besonders vorteilhafte, insbesondere langlebige Verriegelungseinheit gebildet werden.

Des Weiteren wird vorgeschlagen, dass die Funktionseinheit zumindest ein zwischen zumindest zwei Stellungen verfahrbares Verriegelungselement aufweist, das zumindest im Wesentlichen durch das wenigstens eine ansteuerbare Formgedächtniselement verstellbar ist. Unter einem "Verriegelungselement" soll insbesondere ein Element verstanden werden, das in einem Verriegelungszustand in einen formschlüssigen Kontakt mit einem korrespondierend ausgebildeten Verriegelungselement zu kommt, um so das Flugzeugsitzelement in wenigstens einer Position, vorzugsweise in einer Verstau- oder Verriegelposition, zu verriegeln. Das Verriegelungselement ist dabei vorzugsweise als ein Verriegelungspin oder ein Verriegelungshaken ausgebildet. Grundsätzlich ist es auch denkbar, dass das Verriegelungselement eine andere, dem Fachmann als sinnvoll erscheinende Form aufweist. Dadurch kann eine Funktionseinheit bereit gestellt werden, mittels der ein Flugzeugsitzelement besonders vorteilhaft und einfach verriegelt und entriegelt werden kann.

Weiterhin wird vorgeschlagen, dass das wenigstens eine ansteuerbare Formgedächtniselement als ein Verriegelungselement ausgebildet ist, das zumindest in einem Betriebszustand dazu vorgesehen ist, ein anderes Element, wie insbesondere ein korrespondierend ausgebildetes Verriegelungselement, zu blockieren und/oder zu verriegeln. Darunter, dass das "Formgedächtniselement als ein Verriegelungselement ausgebildet ist" soll insbesondere verstanden werden, dass das Formgedächtniselement zur Verriegelung des Flugzeugsitzelements so bewegt wird, dass es in einer Verriegelposition selbst mit einem Verriegelungselement in einem formschlüssigen Kontakt ist. Dadurch kann die Funktionseinheit zur Verriegelung eines Flugzeugsitzelements besonders einfach ausgebildet werden.

Außerdem wird vorgeschlagen, dass die Funktionseinheit zumindest als ein Teil eines Sitzverstellmechanismus ausgebildet ist. Unter einem "Sitzverstellmechanismus" soll insbesondere ein Mechanismus verstanden werden, mittels dem eine Sitzposition des Flugzeugsitzes zwischen zumindest einer Komfortposition und einer TTL-Position, in der der Flugzeugsitz in einer maximal aufrechten Stellung ausgerichtet ist, verstellt werden kann. Durch den Sitzverstellmechanismus können insbesondere die Rückenlehne und/oder der Sitzboden relativ zu einer Aufständereinheit des Flugzeugsitzes verstellt werden. Dadurch kann ein Sitzverstellmechanismus besondere einfach verriegelt werden, wodurch besonders vorteilhaft einfach eine zentrale Verriegelung aller Flugzeugsitze in einer Flugzeugkabine erfolgen kann.

Es wird weiter vorgeschlagen, dass das Formgedächtniselement dazu vorgesehen ist, zumindest in einem Betriebszustand wenigstens ein Aktuatorelement zu betätigen. Unter einem "Aktuatorelement" soll insbesondere ein Element verstanden werden, dass zumindest in einem aktivierten Zustand eine Kraft auf ein weiteres Element ausüben kann, um insbesondere eine Bewegung, wie beispielsweise eine Linear- und/oder Schwenkbewegung eines Elements zu bremsen oder zu initiieren. Dadurch kann das Formgedächtniselement besonders vorteilhaft zur einfachen Ansteuerung eines Aktuatorelements verwendet werden.

Zudem wird vorgeschlagen, dass die Flugzeugsitzvorrichtung wenigstens eine Bedieneinheit umfasst, über die das wenigstens eine Formgedächtniselement ansteuerbar ist, die wenigstens ein Bedienelement umfasst, das vorzugsweise als ein berührungsloser Sensor ausgebildet ist. Unter einer "Bedieneinheit" soll wenigstens eine Einheit verstanden werden, die von einer Person bedienbar ist und über die entsprechend Steuersignale an ein zu steuerndes Element ausgesendet werden. Grundsätzlich ist es denkbar, dass das Bedienelement als ein elektrisches oder elektronisches Bauteil ausgebildet ist, beispielsweise als ein Schalter oder ein Druckknopf, der bei Betätigung ein Steuersignal zur Betätigung des wenigstens einen Formgedächtniselements ausgibt. Unter einem "berührungslosen Sensor" soll dabei insbesondere ein Sensor verstanden werden, der betätigt werden kann, ohne dass er direkt von einem Bediener berührt wird. Dabei ist ein berührungsloser Sensor vorzugsweise als ein Infrarot-Sensor, ein Bewegungssensor oder als eine Kamera ausgebildet. Dadurch kann eine besonders einfache und intuitive Steuerung der Flugzeugsitzvorrichtung erreicht werden.

Ferner wird vorgeschlagen, dass die Funktionseinheit dazu vorgesehen ist, das Flugzeugsitzelement in einem Crashfall zu verriegeln. Unter einem "Crashfall" soll insbesondere ein Überlastfall verstanden werden. Unter einem "Überlastfall" soll insbesondere eine Situation verstanden werden, in der Kräfte auf einen Flugzeugsitz, insbesondere das Flugzeugsitzmodul wirken, die größer sind als in einem Normalbetriebszustand, beispielsweise während eines Unfalls. Vorzugsweise soll unter einem Überlastfall insbesondere ein Crashfall verstanden werden, der beispielsweise auch gezielt in einem Crashtest simuliert werden kann. Unter einem "Crashtest" soll dabei insbesondere ein entsprechend einem standardisierten Crashtestverfahren durchgeführter Test auf einer entsprechenden Testvorrichtung verstanden werden, bei dem Aufprallkräfte auf einen Flugzeugsitz oder eine Flugzeugsitzanordnung aufgezeichnet werden, um insbesondere für eine Zulassung eines Flugzeugsitzes und/oder Sitzbauteile eines Flugzeugsitzes erforderliche Daten zu generieren. Unter einem "Normalbetriebszustand" soll dabei insbesondere ein Betriebszustand während eines normalen Betriebs der Flugzeugsitzvorrichtung verstanden werden, insbesondere während eines in einem Flugzeug eingebauten Zustands und während eines Betriebs des Flugzeugs. Darunter, dass die Funktionseinheit in einem Crashfall ein Flugzeugsitzelement verriegelt, soll vorzugsweise insbesondere verstanden werden, dass die Funktionseinheit das Flugzeugsitzelement zusätzlich zu einer normalen Verriegelung verriegelt. Grundsätzlich ist es auch denkbar, dass die Funktionseinheit in dem Crashfall die einzige Verriegelung des Flugzeugsitzelements darstellt. Dadurch kann ein Flugzeugsitzelement besonders vorteilhaft in einem Crashfall gesichert werden und mögliche Verletzungsgefahren für einen Passagier vorteilhaft verringert werden.

Die erfindungsgemäße Flugzeugsitzvorrichtung soll hierbei nicht auf die oben beschriebene Anwendung und Ausführungsform beschränkt sein. Insbesondere kann die erfindungsgemäße Flugzeugsitzvorrichtung zu einer Erfüllung einer hierin beschriebenen Funktionsweise eine von einer hierin genannten Anzahl von einzelnen Elementen, Bauteilen und Einheiten abweichende Anzahl aufweisen, soweit sie in den Anwendungsbereich der beigefügten Ansprüche fallen.

### Zeichnungen

Weitere Vorteile ergeben sich aus der folgenden Zeichnungsbeschreibung. In den Zeichnungen sind drei Ausführungsbeispiele der Erfindung dargestellt. Fünf weitere Beispiele sind auch dargestellt und dienen nur zur Veranschaulichung.

Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen, soweit sie in den Anwendungsbereich der beigefügten Ansprüche fallen.

Es zeigen:
- Fig. 1: eine schematische Darstellung eines Flugzeugsitzmoduls mit einer Flugzeugsitzvorrichtung in einem ersten Beispiel, das nicht Teil der Erfindung ist, mit einem Flugzeugsitzelement, das als ein Bildschirm ausgebildet ist,
- Fig. 2: eine schematische Ansicht einer Bildschirmverstelleinheit mit einer Funktionseinheit einer Flugzeugsitzvorrichtung, die nicht Teil der Erfindung ist,
- Fig. 3: eine schematische Darstellung eines Flugzeugsitzmoduls mit einer Flugzeugsitzvorrichtung in einem ersten Ausführungsbeispiel, mit einem Flugzeugsitzelement, das als ein Tisch ausgebildet ist,
- Fig. 4: eine schematische Darstellung eines Flugzeugsitzmoduls mit einer Flugzeugsitzvorrichtung in einem zweiten Ausführungsbeispiel, mit einem Flugzeugsitzelement, das als eine Serviceklappe ausgebildet ist,
- Fig. 5: eine schematische Darstellung eines Flugzeugsitzmoduls mit einer Flugzeugsitzvorrichtung in einem Beispiel, das nicht Teil der Erfindung ist,
- Fig. 6: eine schematische Darstellung eines Flugzeugsitzmoduls mit einer Flugzeugsitzvorrichtung in einem Beispiel, das nicht Teil der Erfindung ist, mit einem Flugzeugsitzelement, das als Flugzeugsitzverriegelungseinheit ausgebildet ist,
- Fig. 7: eine schematische Darstellung eines Flugzeugsitzmoduls in einem Beispiel, das nicht Teil der Erfindung ist, mit einem Flugzeugsitzelement, das als eine Flugzeugsitzverriegelungseinheit ausgebildet ist,
- Fig. 8: eine schematische Darstellung eines Flugzeugsitzmoduls in einem Beispiel, das nicht Teil der Erfindung ist, mit einem Flugzeugsitzelement, das als eine Klappe ausgebildet ist,
- Fig. 9: eine schematische Darstellung eines Flugzeugsitzmoduls in einem dritten Ausführungsbeispiel mit einem Flugzeugsitzelement, das als ein Esstisch ausgebildet ist, und
- Fig. 10: eine weitere Darstellung des Flugzeugsitzmoduls in dem dritten Ausführungsbeispiel.

### Beschreibung der Ausführungsbeispiele

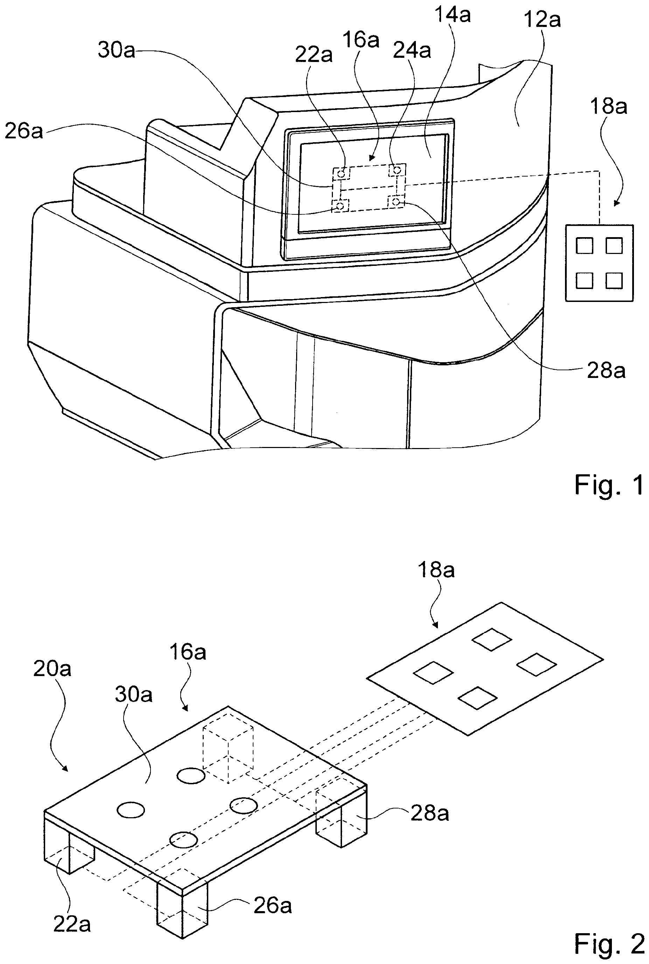

Die Figuren 1 und 2 zeigen eine Flugzeugsitzvorrichtung in einem ersten Beispiel, das nicht Teil der Erfindung ist. Die Flugzeugsitzvorrichtung ist Teil eines schematisch dargestellten Flugzeugsitzmoduls 10a mit einem Flugzeugsitz. Das Flugzeugsitzmodul 10a ist als ein Businessclass- oder Firstclass-Sitzmodul ausgebildet. Das Flugzeugsitzmodul 10a umfasst ein Panel 12a. Das Panel 12a ist als eine Umhausung des Flugzeugsitzmoduls 10a ausgebildet. Die Flugzeugsitzvorrichtung umfasst eine Flugzeugsitzelement 14a, das als ein Bildschirm ausgebildet ist. Das als Bildschirm ausgebildete Flugzeugsitzelement 14a ist in das Panel 12a des Flugzeugsitzmoduls 10a integriert oder aufgesetzt. Das als Bildschirm ausgebildete Flugzeugsitzelement 14a ist in einem Bereich vor dem Flugzeugsitz angeordnet. Dadurch kann ein auf dem Flugzeugsitz befindlicher Passagier das als Bildschirm ausgebildete Flugzeugsitzelement 14a sehen. Grundsätzlich wäre es auch denkbar, dass die Flugzeugsitzvorrichtung Teil eines Flugzeugsitzes ist, der Teil einer Economyklassen-Sitzreihe ist. Dabei wäre es denkbar, dass das Panel 12a, in dem das Flugzeugsitzelement 14a angeordnet ist, als eine Bordwand oder als eine Rückenlehne eines Flugzeugsitzes ausgebildet ist.

Die Flugzeugsitzvorrichtung umfasst eine Bildschirmverstelleinheit 16a. Die Bildschirmverstelleinheit 16a ist dazu vorgesehen, das als Bildschirm ausgebildete Flugzeugsitzelement 14a verstellbar zu lagern. Mittles der Bildschirmverstelleinheit 16a kann das Flugzeugsitzelement 14a relativ zu dem Panel 12a, insbesondere zu dem Flugzeugsitz verstellt werden. Insbesondere eine Ausrichtung, also eine Neigung des Flugzeugsitzelements 14a relativ zu einem Passagier auf dem Flugzeugsitz, kann mittels der Bildschirmverstelleinheit 16a verstellt werden. Dadurch kann eine Ausrichtung des Flugzeugsitzelements 14a an eine Blickhöhe und an einen Blickwinkel eines Passagiers angepasst werden. Die Bildschirmverstelleinheit 16a ist dazu vorgesehen, von einem Passagier bedient zu werden, wodurch der Passagier insbesondere aktiv eine Verstellung des als Bildschirm ausgebildeten Flugzeugsitzelements 14a vornehmen kann. Grundsätzlich wäre es auch denkbar, dass das Flugzeugsitzelement 14a als ein anderes, dem Fachmann als sinnvoll erscheinendes Element ausgebildet ist, beispielsweise als ein Tablet-Halter, der dazu vorgesehen ist, einen Tablet-Computer zu befestigen, als eine Kopfstütze, oder als ein Cupholder.

Die Flugzeugsitzvorrichtung weist eine Bedieneinheit 18a auf, über die die Bildschirmverstelleinheit 16a bedient werden kann. Die Bedieneinheit 18a weist ein oder mehrere, nicht näher dargestellte Bedienelemente auf, über deren Betätigung ein Bediener, insbesondere ein Passagier die Bildschirmverstelleinheit 16a zur Verstellung des als Bildschirm ausgebildeten Flugzeugsitzelements 14a betätigen kann. Dabei ist es denkbar, dass die Bedieneinheit 18a lediglich ein Bedienelement aufweist, oder mehrere Bedienelemente zur Steuerung der Bildschirmverstelleinheit 16a umfasst. Dabei ist es denkbar, dass die Bedienelemente als Taster, Knöpfe oder Berührungssensitive Sensoren ausgebildet sind. Grundsätzlich wäre es auch denkbar, dass die Bedieneinheit 18a in ein Gesamtbedienelement des Flugzeugsitzes integriert ist und beispielsweise durch einen an dem Flugzeugsitz angebrachten Touchscreen ausgebildet ist. Grundsätzlich ist es auch denkbar, dass die Bedieneinheit 18a von einem persönlichen elektronischen Gerät, wie beispielsweise von einem Tablet-Computer oder einem Smart-Phone gebildet ist, das mit der Flugzeugsitzvorrichtung auf eine dem Fachmann als sinnvoll erscheinende Weise, insbesondere über eine drahtlose Verbindung, mit der Flugzeugsitzvorrichtung gekoppelt ist.

Die Bildschirmverstelleinheit 16a weist eine Funktionseinheit 20a auf. Die Funktionseinheit 20a ist zur Bewegung des Flugzeugsitzelements 14a vorgesehen. Die Funktionseinheit 20a ist zur Steuerung, insbesondere zur Ausrichtung des Flugzeugsitzelements 14a vorgesehen. Die Funktionseinheit 20a ist dazu vorgesehen, eine von einem Bediener über die Bedieneinheit 18a eingegebene Ausrichtungsvorgabe umzusetzen und das als Bildschirm ausgebildete Flugzeugsitzelement 14a entsprechend zu verstellen. Die Funktionseinheit 20a weist vier ansteuerbare Formgedächtniselemente 22a, 24a, 26a, 28a auf. Grundsätzlich wäre es auch denkbar, dass die Funktionseinheit 20a eine andere Anzahl an Formgedächtniselementen 22a, 24a, 26a, 28a aufweist, beispielsweise lediglich zwei, drei, fünf oder mehr. Die Formgedächtniselemente 22a, 24a, 26a, 28a sind als Federn aus einer Formgedächtnislegierung ausgebildet. Die Formgedächtniselemente 22a, 24a, 26a, 28a sind durch eine Beaufschlagung mit einem Strom dazu vorgesehen ihre Länge zu verändern. Die Formgedächtniselemente 22a, 24a, 26a, 28a sind separat über die Bedieneinheit ansteuerbar. Die Formgedächtniselemente 22a, 24a, 26a, 28a sind dazu vorzugsweise einzeln mit der Bedieneinheit 18a verkabelt. Die Funktionseinheit 20a weist ein Verstellelement 30a auf. Das Verstellelement 30a weist auf einer ersten Seite einen Anbindungsbereich für das Flugzeugsitzelement 14a auf. In einem montierten Zustand ist das Flugzeugsitzelement 14a über den Anbindungsbereich mit dem Verstellelement 30a verbunden. Das Verstellelement 30a weist eine rechteckige Form auf. Grundsätzlich ist es auch denkbar, dass das Verstellelement 30a eine andere, beispielsweise eine runde oder eine ovale Form aufweist. Die Formgedächtniselemente 22a, 24a, 26a, 28a sind auf einer zweiten, dem Flugzeugsitzelement 14a gegenüberliegenden Seite des Verstellelements 30a angeordnet. Je eines der Formgedächtniselemente 22a, 24a, 26a, 28a ist in einem Eckbereich des rechteckigen Verstellelements 30a angeordnet. Die Formgedächtniselemente 22a, 24a, 26a, 28a sind jeweils mit einer ersten Seite fest mit dem Verstellelement 30a verbunden. Auf einer zweiten Seite stützen sich die Formgedächtniselemente 22a, 24a, 26a, 28a über eine nicht näher dargestellte Konstruktion an dem Panel 12a ab. Durch die Abstützung an dem Panel 12a kann durch eine Längenänderung einzelner Formgedächtniselemente 22a, 24a, 26a, 28a eine Verkippung des Verstellelements 30a und dadurch auch des damit verbundenen Flugzeugsitzelements 14a relativ zu dem Panel 12a erreicht werden. Durch unterschiedliche Ansteuerung und dadurch unterschiedliche Längen der Formgedächtniselemente 22a, 24a, 26a, 28a kann die Neigung des Verstellelements 30a und dadurch auch des damit verbundenen Flugzeugsitzelements 14a relativ zu dem Panel 12a eingestellt werden.

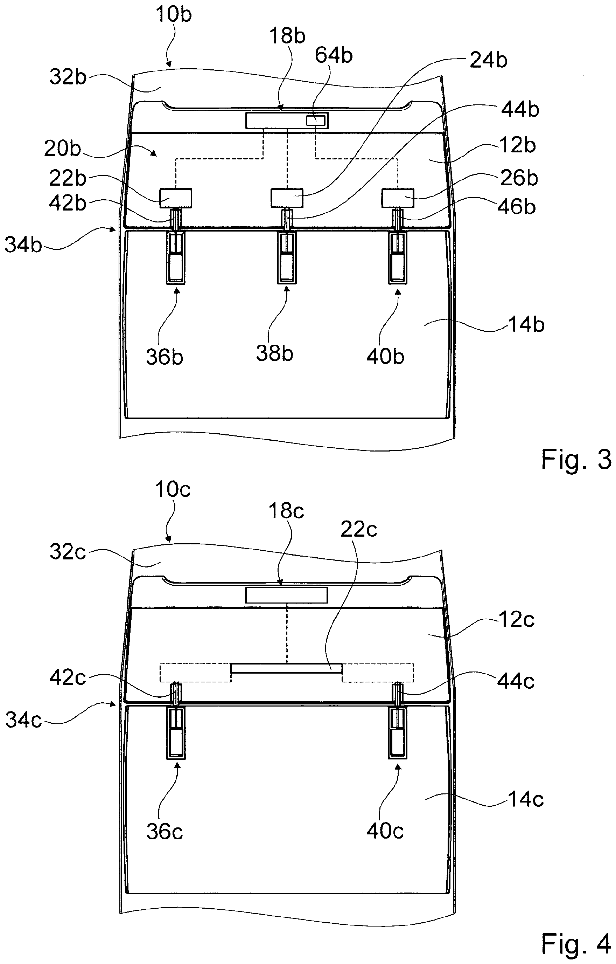

In den Fig. 3 bis 10 sind weitere Beispiele gezeigt. Die nachfolgenden Beschreibungen und die Zeichnungen beschränken sich im Wesentlichen auf die Unterschiede zwischen den Beispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Beispiele, insbesondere der Fig. 1 und 2, verwiesen werden kann. Zur Unterscheidung der Beispiele ist der Buchstabe a den Bezugszeichen des Beispiels in Fig. 1 und 2 nachgestellt. In den Beispielen der Fig. 3 bis 10 ist der Buchstabe a durch die Buchstaben b bis h ersetzt.

Die Figur 3 zeigt eine Flugzeugsitzvorrichtung in einem ersten Ausführungsbeispiel. Die Flugzeugsitzvorrichtung 10b ist Teil eines schematisch dargestellten Flugzeugsitzes. Der Flugzeugsitz weist eine Rückenlehne 32b auf. Die Rückenlehne 32b umfasst ein Panel 12b, das eine Rückseite der Rückenlehne 32b ausbildet. Der Flugzeugsitz umfasst weiter ein als Esstisch ausgebildetes Flugzeugsitzelement 14b. Das als Esstisch ausgebildete Flugzeugsitzelement 14b ist zumindest zwischen einer Verstaustellung und einer Gebrauchsstellung verschwenkbar an der Rückenlehne 32b gelagert. In der Verstaustellung ist das Flugzeugsitzelement 14b an die Rückenlehne 32b angeklappt. In einem angeklappten Zustand liegt eine obere Kante des als Esstisch ausgebildeten Flugzeugsitzelements 14b vorzugsweise an einem Vorsprung des Panels 12b der Rückenlehne 32b an. Dabei ist es insbesondere denkbar, dass das als Esstisch ausgebildete Flugzeugsitzelement 14b zur Überführung in die Verstaustellung zusammengeklappt werden muss, wodurch die in dem angeklappten Zustand obere Kante von Kanten zweier zueinander schwenkbar angeordneter Esstischhälften gebildet ist.

Die Flugzeugsitzvorrichtung weist eine Verriegelungseinheit 34b auf. Die Verriegelungseinheit 34b ist dazu vorgesehen, das Flugzeugsitzelement 14b in der Verstaustellung an der Rückenlehne 32b zu verriegeln. Im Bereich der oberen Kante des als Esstisch ausgebildeten Flugzeugsitzelements 14b weist die Verriegelungseinheit 34b drei Verriegelungselemente 36b, 38b, 40b auf. Die Verriegelungselemente 36b, 38b, 40b sind als Verriegelungsaufnahmen ausgebildet. Die Verriegelungselemente 36b, 38b, 40b sind dazu vorgesehen, dass zur Verriegelung des Flugzeugsitzelements 14b in der Verstaustellung Formschlusselemente formschlüssig in sie eingreifen. Die Verriegelungseinheit 34b weist eine Funktionseinheit 20b auf. Die Funktionseinheit 20b ist zur Ver- und Entriegelung des Flugzeugsitzelements 14b in der Verstaustellung vorgesehen. Die Funktionseinheit 20b umfasst drei Verriegelungselemente 42b, 44b, 46b, die zwischen zwei Stellungen verfahrbar sind. Die Verriegelungselemente 42b, 44b, 46b sind in der Rückenlehne 32b, insbesondere in dem Panel 12b der Rückenlehne 32b angeordnet. Die Verriegelungselemente 42b, 44b, 46b sind linear verschiebbar in dem Panel 12b angeordnet. In einer Entriegelstellung sind die Verriegelungselemente 42b, 44b, 46b in das Panel 12b eingefahren. In einer Verriegelstellung ragen die Verriegelungselemente 42b, 44b, 46b aus dem Panel 12b heraus und sind dabei insbesondere so angeordnet, dass sie in die Verriegelungselemente 36b, 38b, 40b die in dem Flugzeugsitzelement 14b angeordnet sind, eingreifen, wenn das Flugzeugsitzelement 14b in seiner Verstaustellung angeordnet ist. Grundsätzlich ist es auch denkbar, dass die Funktionseinheit 20b eine andere Anzahl an Verriegelungselementen 42b, 44b, 46b aufweist, beispielsweise lediglich ein mittleres Verriegelungselement 44b, oder lediglich zwei außen angeordnete Verriegelungselemente 42b, 46b. Die Verriegelungseinheit 34b würde eine entsprechende Anzahl an korrespondierend ausgebildeten, als Verriegelungsaufnahmen ausgebildeten, Verriegelungselementen 36b, 38b, 40b aufweisen.

Die Funktionseinheit 20b weist drei Formgedächtniselemente 22b, 24b ,26b auf. Die Formgedächtniselemente 22b, 24b ,26b sind zur Verriegelung des als Esstisch ausgebildeten Flugzeugsitzelements 14b vorgesehen. Die Formgedächtniselemente 22b, 24b ,26b sind zur Steuerung der Verriegelungselemente 42b, 44b, 46b der Funktionseinheit 20b vorgesehen. Die Formgedächtniselemente 22b, 24b ,26b sind dazu vorgesehen, die Verriegelungselemente 42b, 44b, 46b zwischen ihrer Verriegelstellung und ihrer Entriegelstellung zu verstellen. Die Formgedächtniselemente 22b, 24b ,26b sind dazu fest mit den Verriegelungselementen 42b, 44b, 46b verbunden. Die Formgedächtniselemente 22b, 24b ,26b weisen zwei Zustände auf. In einem ersten Zustand verstellen die Formgedächtniselemente 22b, 24b ,26b die Verriegelungselemente 42b, 44b ,46b in ihre Entriegelstellung. In einem zweiten Zustand verstellen die Formgedächtniselemente 22b, 24b ,26b die Verriegelungselemente 42b, 44b ,46b in ihre Verriegelstellung. Grundsätzlich wäre es auch denkbar, dass die Funktionseinheit 20b für mehrere Verriegelungselemente 42b, 44b, 46b lediglich ein Formgedächtniselement 22b zur Steuerung aufweist.

Die Flugzeugsitzvorrichtung weist eine Bedieneinheit 18b auf, über die die Verriegelungseinheit 34b bedient werden kann. Die Bedieneinheit 18b weist ein Bedienelement 64b auf, über deren Betätigung ein Bediener, insbesondere ein Passagier, die Verriegelungseinheit 34b zur Verriegelung des als Esstisch ausgebildeten Flugzeugsitzelements 14b betätigen kann. Durch Betätigung der Bedieneinheit 18b werden die Formgedächtniselemente 22b, 24b, 26b der Funktionseinheit 20b angesteuert. Dabei werden die Formgedächtniselemente 22b, 24b, 26b entsprechend so angesteuert, dass sie zwischen ihren zwei Zuständen verstellt werden. Das Bedienelement 64b ist als ein berührungsloser Sensor ausgebildet. Grundsätzlich wäre es auch denkbar, dass das Bedienelement 64b als ein Taster, ein Schalter, oder als ein anderes elektrisches oder elektronisches Bedienelement ausgebildet ist. Das als berührungsloser Sensor ausgebildete Bedienelement kann bestimmte Bewegungen eines Passagiers sensieren und ein entsprechendes Signal zur Steuerung der Formgedächtniselemente 22b, 24b, 26b ausgeben. Der Sensor ist als ein Bewegungssensor ausgebildet. Grundsätzlich ist es auch denkbar, dass der Sensor als ein Infrarot-Sensor ausgebildet ist. Dabei ist insbesondere denkbar, dass ein Sensor beispielsweise eine Handgeste eines Passagiers, insbesondere in dem Bereich des als Esstisch ausgebildeten Flugzeugsitzelements 14b, erkennt und dadurch insbesondere eine Entriegelung des Flugzeugsitzelements 14b durch eine entsprechende Ansteuerung der Formgedächtniselemente 22b, 24b, 26b auslöst. Vorzugsweise wird die Verriegelungseinheit 34b in einem Falle einer Nichtversorgung mit Strom, oder einer sonstigen Störung in dem verriegelten Zustand, in dem sie das Flugzeugsitzelement 14b in der Verstaustellung an der Rückenlehne 32b verriegelt, gesichert. Dabei ist das Flugzeugsitzelement 14b bei einer Nichtversorgung mit Strom oder einer anderen elektrischen oder elektronischen Störung von der Gebrauchsstellung immer in seine Verstaustellung an der Rückenlehne 32b verstellbar und dort insbesondere auch verriegelbar. Grundsätzlich ist es auch denkbar, dass die Verriegelungseinheit 34b zusätzlich ein mechanisches Betätigungsmittel, wie beispielsweise einen Bowdenzug oder ein Hebel aufweist, mittels dessen die Verriegelungseinheit 34b von einem Passagier manuell betätigbar ist, auch in einem Falle einer Nichtversorgung mit Strom. Dabei ist das Betätigungsmittel vorzugsweise verdeckt angeordnet, sodass es insbesondere zu einer Bedienung durch ein Flugpersonal vorgesehen ist.

Die Flugzeugsitzvorrichtung weist eine nicht näher dargestellte Sicherungsvorrichtung auf. Die Sicherungsvorrichtung ist dazu vorgesehen, das als Esstisch ausgebildetes Flugzeugsitzelement 14b in der Verstaustellung zu verriegeln, wenn ein von einem Flugpersonal auslösbares Sperrsignal ausgegeben wird. Das Sperrsignal ist dabei insbesondere als ein TTL-Signal (taxi, takeoff, landing-Signal) ausgebildet, das in sicherheitsrelevanten Flugphasen, wie insbesondere beim Start, bei Turbulenzen und bei der Landung von dem Flugpersonal ausgelöst wird und in denen die Esstische in Verstaustellung und die Flugzeugsitze in einer aufrechten TTL-Position ausgerichtet sein sollten. Die Sicherungsvorrichtung ist vorzugsweise insbesondere dazu vorgesehen, alle in der Flugzeugkabine angeordneten, als Esstisch ausgebildeten Flugzeugsitzelemente 14b in ihrer Verriegelstellung zu arretieren. Vorzugsweise ist die Sicherungsvorrichtung zur Verriegelung des als Esstisch ausgebildeten Flugzeugsitzelements 14b dazu vorgesehen, eine Ansteuerung der entsprechenden Formgedächtniselemente 22b, 24b, 26b zu unterbinden.

Die Figur 4 zeigt eine Flugzeugsitzvorrichtung in einem zweiten Ausführungsbeispiel. Die Flugzeugsitzvorrichtung ist Teil eines schematisch dargestellten Flugzeugsitzes. Der Flugzeugsitz weist eine Rückenlehne 32c auf. Die Rückenlehne 32c umfasst ein Panel 12c, das eine Rückseite der Rückenlehne 32c ausbildet. Der Flugzeugsitz umfasst weiter ein als Esstisch ausgebildetes Flugzeugsitzelement 14c. Das als Esstisch ausgebildete Flugzeugsitzelement 14c ist zumindest zwischen einer Verstaustellung und einer Gebrauchsstellung verschwenkbar an der Rückenlehne 32c gelagert. In der Verstaustellung ist das Flugzeugsitzelement 14c an die Rückenlehne 32c angeklappt. In einem angeklappten Zustand liegt eine obere Kante des als Esstisch ausgebildeten Flugzeugsitzelements 14c vorzugsweise an einem Vorsprung des Panels 12c der Rückenlehne 32c an.

Die Flugzeugsitzvorrichtung weist eine Verriegelungseinheit 34c auf. Die Verriegelungseinheit 34c ist dazu vorgesehen, das Flugzeugsitzelement 14c in der Verstaustellung an der Rückenlehne 32c zu verriegeln. Im Bereich der oberen Kante des als Esstisch ausgebildeten Flugzeugsitzelements 14c weist die Verriegelungseinheit 34c zwei Verriegelungselemente 36c, 38c auf. Die Verriegelungselemente 36c, 38c sind als Verriegelungsaufnahmen ausgebildet. Die Verriegelungselemente 36c, 38c sind dazu vorgesehen, dass zur Verriegelung des Flugzeugsitzelements 14c in der Verstaustellung Formschlusselemente formschlüssig in sie eingreifen. Die Verriegelungseinheit 34c weist eine Funktionseinheit 20c auf. Die Funktionseinheit 20c ist zur Ver- und Entriegelung des Flugzeugsitzelements 14c in der Verstaustellung vorgesehen. Die Funktionseinheit 20c umfasst zwei Verriegelungselemente 42c, 44c, die zwischen zwei Stellungen verfahrbar sind. Die Verriegelungselemente 42c, 44c sind in der Rückenlehne 32c, insbesondere in dem Panel 12c der Rückenlehne 32 angeordnet. Die Verriegelungselemente 42c, 44c, 46c sind linear verschiebbar in dem Panel 12c angeordnet. In einer Entriegelstellung sind die Verriegelungselemente 42c, 44c in das Panel 12c eingefahren. In einer Verriegelstellung ragen die Verriegelungselemente 42c, 44c aus dem Panel 12c heraus und sind dabei insbesondere so angeordnet, dass sie in die Verriegelungselemente 36c, 38c die in dem Flugzeugsitzelement 14c angeordnet sind, eingreifen, wenn das Flugzeugsitzelement 14c in seiner Verstaustellung angeordnet ist.

Die Funktionseinheit 20c weist im Gegensatz zu dem vorhergehenden Ausführungsbeispiel lediglich ein Formgedächtniselement 22c auf. Das Formgedächtniselement 22c ist zur Verriegelung des als Esstisch ausgebildeten Flugzeugsitzelements 14c vorgesehen. Das Formgedächtniselement 22c ist zur Steuerung der beiden Verriegelungselemente 42c, 44c der Funktionseinheit 20c vorgesehen. Das Formgedächtniselement 22c ist dazu vorgesehen, die Verriegelungselemente 42c, 44c zwischen ihrer Verriegelstellung und ihrer Entriegelstellung zu verstellen. Das Formgedächtniselement 22c ist als ein Formgedächtnisdraht ausgebildet. Das als Formgedächtnisdraht ausgebildete Formgedächtniselement 22c ist dazu vorgesehen, zwischen seinem betätigten und seinem unbetätigten Zustand eine unterschiedliche Längenausdehnung aufzuweisen. In dem betätigten Zustand zieht sich das Formgedächtniselement 22c zusammen und weist eine kürzere Längenausdehnung auf als in dem unbetätigten Zustand. Die beiden auf gegenüberliegenden Seiten des Formgedächtniselements 22c angeordneten Verriegelungselemente 42c, 44c sind jeweils an Enden des Formgedächtniselements 22c angebunden. Bei einem Zusammenziehen des Formgedächtniselements 22c in dem betätigten Zustand werden die Verriegelungselemente 42c, 44c über eine nur schematisch dargestellte Verbindung in das Innere des Panels 12c in ihre Entriegelstellung gezogen. Grundsätzlich ist es auch denkbar, dass das eine Formgedächtniselement 22c zur Steuerung der mehreren Verriegelungselemente 42c, 44c als ein anderes Formgedächtniselement 22c ausgebildet ist. Die Flugzeugsitzvorrichtung weist eine Bedieneinheit 18c auf, über die die Verriegelungseinheit 34c bedient werden kann. Die Bedieneinheit 18c ist dabei im Wesentlichen gleich ausgebildet wie im vorhergehenden Ausführungsbeispiel. Grundsätzlich wäre es hier auch denkbar, dass die Verriegelungseinheit 34c im Bezug auf eine Anordnung ihrer Bauteile in dem Flugzeugsitzelement 14c und der Rückenlehne 32c spiegelbildlich zu der oben beschriebenen Ausführung ausgebildet ist. Dabei ist insbesondere denkbar, dass die Funktionseinheit 20c mit ihren Verriegelungselementen 42c, 44c insbesondere in dem Flugzeugsitzelement 14c angeordnet ist. Die korrespondierend ausgebildeten Verriegelungselemente 36c, 38c der Verriegelungseinheit 34c wären entsprechend in der Rückenlehne 32c angeordnet.

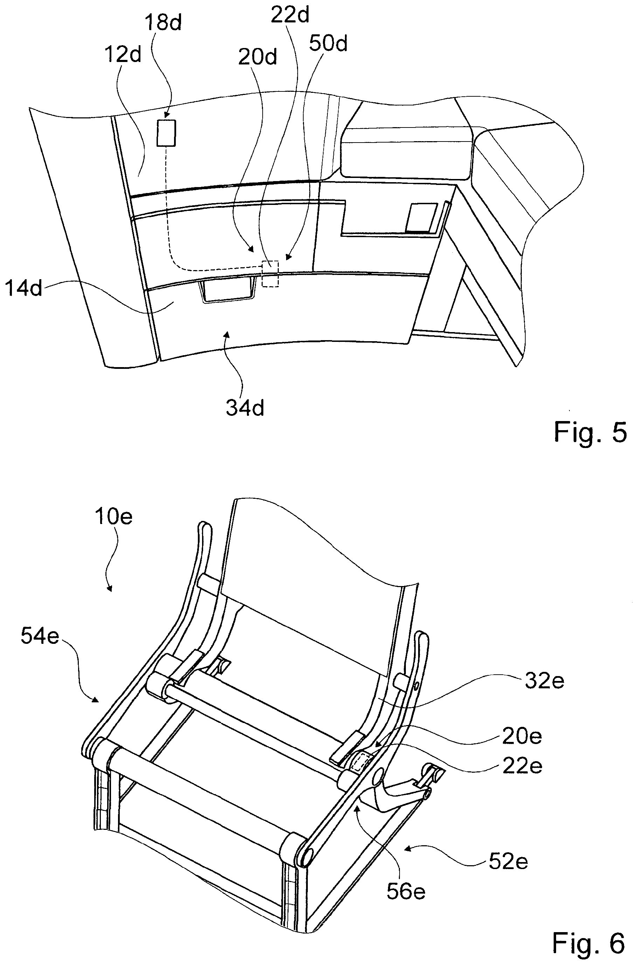

Die Figur 5 zeigt eine Flugzeugsitzvorrichtung in einem Beispiel, das nicht Teil der Erfindung ist. Die Flugzeugsitzvorrichtung ist Teil eines schematisch dargestellten Flugzeugsitzmoduls 10d mit einem Flugzeugsitz. Das Flugzeugsitzmodul 10d ist als ein Businessclass- oder Firstclass-Sitzmodul ausgebildet. Das Flugzeugsitzmodul 10d umfasst ein Panel 12d. In das Panel 12d ist ein Servicebereich integriert. In dem Servicebereich sind beispielsweise unterschiedliche elektrische oder elektronische Komponenten zur Steuerung des Flugzeugsitzes untergebracht. Der Servicebereich ist durch eine Serviceöffnung 50d in dem Panel 12d zugänglich. Die Flugzeugsitzvorrichtung umfasst ein als Serviceklappe ausgebildetes Flugzeugsitzelement 14d, das dazu vorgesehen ist, die Serviceöffnung 50d während eines Normalbetriebs betriebssicher zu verschließen. Das als Serviceklappe ausgebildete Flugzeugsitzelement 14d ist als eine im Wesentlichen flache Platte ausgebildet. Die Flugzeugsitzvorrichtung weist eine Verriegelungseinheit 34d auf. Die Verriegelungseinheit 34d ist zur Verriegelung des Flugzeugsitzelements 14d vorgesehen. Die Verriegelungseinheit 34d weist eine Funktionseinheit 20d auf. Die Funktionseinheit 20d ist zur Verriegelung des Flugzeugsitzelements 14d vorgesehen. Die Funktionseinheit 20d weist ein ansteuerbares Formgedächtniselement 22d auf. Das ansteuerbare Formgedächtniselement 22d ist als ein Verriegelungselement ausgebildet. Das Formgedächtniselement 22d ist zwischen zwei Zuständen verstellbar. Dabei weist das Formgedächtniselement 22d in seinen beiden unterschiedlichen Zuständen eine unterschiedliche Erstreckung und/oder Form auf. Das Formgedächtniselement 22d ist mit dem Panel 12d verbunden. Dabei ist das Formgedächtniselement 22d im Bereich der Serviceöffnung 50d angeordnet. In einem Verriegelungszustand kann das Formgedächtniselement 22d das als Serviceklappe ausgebildete Flugzeugsitzelement 14d formschlüssig im Bereich der Serviceöffnung 50d sichern, sodass das Flugzeugsitzelement 14d die Serviceöffnung 50d sicher verschließt. Dazu weist das Flugzeugsitzelement 14d ein korrespondierendes Verriegelungselement 36 auf, welches von dem als Verriegelungselement ausgebildeten ansteuerbaren Formgedächtniselement 22d verriegelt wird. In einem Entriegelungszustand des Formgedächtniselements 22d kann das als Serviceklappe ausgebildete Flugzeugsitzelement 14d aus der Serviceöffnung 50d entfernt und wieder in diese eingesetzt werden. Zur Betätigung der Funktionseinheit 20d, insbesondere des Formgedächtniselements 22d weist die Flugzeugsitzvorrichtung eine Bedieneinheit 18d auf. Die Bedieneinheit 18d weist einen vorzugsweise lediglich'für ein Wartungspersonal zugängliches, verstecktes Bedienelement auf, mittels dem das Formgedächtniselement 22d zwischen seinen beiden Zuständen verstellt werden kann. So kann durch Betätigung der Bedieneinheit 18d das als Serviceklappe ausgebildete Flugzeugsitzelement 14d ver- und entriegelt werden.

Grundsätzlich wäre es auch denkbar, dass das als Serviceklappe ausgebildete Flugzeugsitzelement 14d eine Serviceöffnung 50d in einer Bordwand oder einer Rückenlehne 32d eines Flugzeugsitzes verschließt.

Figur 6 zeigt eine Flugzeugsitzvorrichtung in einem Beispiel, das nicht Teil der Erfindung ist. Die Flugzeugsitzvorrichtung ist Teil eines schematisch dargestellten Flugzeugsitzes 10e. Der Flugzeugsitz 10e weist eine Aufständereinheit 52e auf. Mit der Aufständereinheit 52e ist der Flugzeugsitz 10e auf einem Kabinenboden aufständerbar. Der Flugzeugsitz 10e umfasst eine Rückenlehne 32e und einen Sitzboden 54e. Der Sitzboden 54e und die Rückenlehne 32e sind zwischen einer Komfortstellung und einer TTL-Stellung verstellbar. In der TTL-Stellung ist die Rückenlehne 32e im Wesentlichen senkrecht ausgerichtet. In der Komfortstellung ist die Rückenlehne 32e nach hinten geneigt. Die Flugzeugsitzvorrichtung umfasst ein als Aktuatorelement 56e ausgebildetes Flugzeugsitzelement 14e, das dazu vorgesehen ist, die Rückenlehen 32e und den Sitzboden 54e in der TTL-Stellung, in der Komfortstellung und in beliebigen Zwischenstellungen zu arretieren. Das Aktuatorelement 56e ist als eine Schlingfederbremse ausgebildet. Das als Schlingfederbremse ausgebildete Aktuatorelement ist um ein Querrohr der Aufständereinheit 52e gewickelt. In einem geschlossenen Zustand verriegelt das Aktuatorelement 56e die Rückenlehne 34e relativ zu der Aufständereinheit 52e. In einem geöffneten Zustand gibt das Aktuatorelement 56e eine Bewegung der Rückenlehne 32e relativ zu der Aufständereinheit 52e frei.

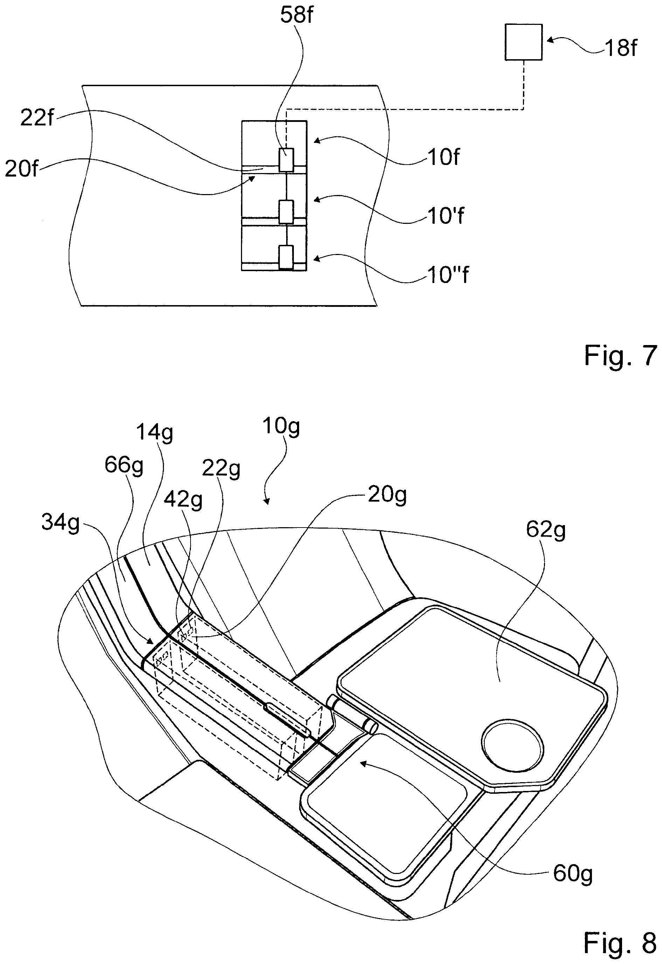

Zur Betätigung des Aktuatorelements 56e weist die Flugzeugsitzvorrichtung eine Funktionseinheit 20e auf. Die Funktionseinheit 20e umfasst ein Formgedächtniselement 22e. Das Formgedächtniselement 22e ist mit dem Aktuatorelement 56e gekoppelt. Das Formgedächtniselement 22e ist dazu vorgesehen, das Aktuatorelement 56e zwischen seinem geschlossenen und geöffneten Zustand zu verstellen. Durch das Formgedächtniselement 22e kann so eine Verstellung der Rückenlehne 32e und/oder des Sitzbodens 54e freigegeben oder gesperrt werden. In einem betätigten Zustand des Formgedächtniselements 22e betätigt das Formgedächtniselement 22e das Aktuatorelement 56e und überführt es in seinen geöffneten Zustand. Eine Rückenlehnenverstellung ist dadurch freigegeben. In einem unbetätigten Zustand betätigt das Formgedächtniselement 22e das Aktuatorelement 56e nicht und hält es so in seinem geschlossenen Zustand. Eine Rückenlehnenverstellung ist dadurch verriegelt. Grundsätzlich ist es auch denkbar, dass das als Aktuatorelement 56e ausgebildete Flugzeugsitzelement 14e als eine betätigbare Gasdruckfeder ausgebildet ist, das einen Mechanismus zur Verstellung der Rückenlehne 32e betätigt. Das Formgedächtniselement 22e könnte dabei als ein Formgedächtnisdraht ausgebildet sein, der anstatt eines Bowdenzuges das als Gasdruckfeder ausgebildete Aktuatorelement 56e betätigen würde. Die Figur 7 zeigt schematisch eine Flugzeugsitzvorrichtung in einem Beispiel, das nicht Teil der Erfindung ist.

Die Flugzeugsitzvorrichtung umfasst eine Flugzeugkabine in der mehrere Flugzeugsitzreihen angeordnet sind. Die Flugzeugsitzvorrichtung umfasst mehrere Flugzeugsitze 10f, 10'f, 10"'f, von denen beispielhaft nur drei schematisch dargestellt sind. Die Flugzeugsitze 10f, 10'f, 10"f können jeweils zwischen einer Komfortstellung und einer TTL-Stellung verstellt werden. Die Flugzeugsitze 10f, 10'f, 10"f umfassen jeweils ein als Flugzeugsitzverriegelungseinheit ausgebildetes Flugzeugsitzelement 14f, das dazu vorgesehen ist, die Flugzeugsitze 10f, 10'f, 10"f jeweils in einer TTL-Stellung zu verriegeln. Die Flugzeugsitzvorrichtung weist für jeden der Flugzeugsitze eine Funktionseinheit 20f auf. Jede der Funktionseinheiten 20f umfasst ein Verriegelungselement 58f, das den entsprechenden Flugzeugsitz 10f, 10'f, 10"f in seiner TTL-Stellung verriegeln kann. Die Funktionseinheiten 20f weisen jeweils ein Formgedächtniselement 22f auf, das zur Betätigung des als Flugzeugsitzverriegelungseinheit ausgebildeten Flugzeugsitzelements 14f vorgesehen ist. In einem betätigten Zustand betätigen die Formgedächtniselemente 22f die jeweiligen Verriegelungselemente 58f, sodass diese den jeweiligen Flugzeugsitz 10f, 10'f, 10"f in der TTL-Stellung sperren. Die Flugzeugsitzvorrichtung weist eine Bedieneinheit 18f auf, über die alle Funktionseinheiten 20f aller Flugzeugsitze 10f, 10'f, 10"f zeitgleich betätigbar sind. Die Bedieneinheit 18f ist als eine zentrale, lediglich von einem Bordpersonal bedienbare Bedieneinheit 18f ausgebildet. Durch die zentrale Bedieneinheit 18f kann ein Bordpersonal alle Flugzeugsitze 10f, 10'f, 10"f in einer Flugzeugkabine zentral in ihrer TTL-Stellung sperren oder freigeben.

Die Figur 8 zeigt eine Flugzeugsitzvorrichtung in einem Beispiel, das nicht Teil der Erfindung ist. Die Flugzeugsitzvorrichtung ist Teil eines schematisch dargestellten Flugzeugsitzes 10g. Der Flugzeugsitz 10g ist als ein Front-Row-Sitz ausgebildet. Der Flugzeugsitz 10g weist eine Armlehne 60g auf. Unter der Armlehne 60g ist ein nicht näher dargestellter Stauraum 66g angeordnet. Der Flugzeugsitz weist einen Esstisch 62g auf. Der Esstisch ist dazu vorgesehen in einer Verstaustellung in dem Stauraum 66g unter der Armlehne 60g angeordnet zu werden. Der Flugzeugsitz 10g weist einen nicht näher dargestellten Lagermechanismus auf, mittels dem der Esstisch 62g zwischen der Verstaustellung in dem Stauraum 66g und einer Gebrauchsstellung vor einer Sitzfläche des Flugzeugsitzes verstellt werden kann. Die Flugzeugsitzvorrichtung weist ein Flugzeugsitzelement 14g auf. Das Flugzeugsitzelement 14g ist als eine Klappe ausgebildet, die den Stauraum 66g unter der Armlehne 60g verschließbar macht. In einem geöffneten Zustand des als Klappe ausgebildeten Flugzeugsitzelements 14g kann der Esstisch 62g aus dem Stauraum 66g entnommen bzw. in diesen hinein bewegt werden. In einem geschlossenen Zustand des als Klappe ausgebildeten Flugzeugsitzelements 14g ist der Esstisch in seiner Verstaustellung sicher verstaut.

Die Flugzeugsitzvorrichtung weist eine Verriegelungseinheit 34g auf. Die Verriegelungseinheit 34g ist dazu vorgesehen, das Flugzeugsitzelement 14g in der geschlossenen Stellung zu verriegeln. Die Funktionseinheit 20g ist zur Ver- und Entriegelung des als Klappe ausgebildeten Flugzeugsitzelements 14g in dem geschlossenen Zustand vorgesehen. Die Verriegelungseinheit 34g ist insbesondere dazu vorgesehen, das als Klappe ausgebildete Flugzeugsitzelement 14g in dem geschlossenen Zustand zu verriegeln, wenn ein von einem Flugpersonal auslösbares Sperrsignal ausgegeben wird. Das Sperrsignal ist dabei insbesondere als ein TTL-Signal (taxi, takeoff, landing-Signal) ausgebildet, das in sicherheitsrelevanten Flugphasen, wie insbesondere beim Start, bei Turbulenzen und bei der Landung von dem Flugpersonal ausgelöst wird und in denen die Esstische in Verstaustellung und die Flugzeugsitze in einer aufrechten TTL-Position ausgerichtet sein sollten. Die Verriegelungseinheit 34g weist eine Funktionseinheit 20g auf, die ein Verriegelungselement 42g auf aufweist. Das Verriegelungselement 42g ist dazu vorgesehen, in einem geschlossenen Zustand das als Klappenelement ausgebildete Flugzeugsitzelement 14g formschlüssig mit einem Verriegelungselement der Verriegelungseinheit 34g, das von der Armlehne 60g ausgebildet ist, zu koppeln. Die Funktionseinheit 20g weist zur Steuerung des Verriegelungselements 42g ein Formgedächtniselement 22g auf. Zur Ansteuerung der Funktionseinheit 20g und insbesondere des Formgedächtniselements 22g weist die Flugzeugsitzvorrichtung eine nicht näher dargestellte Bedieneinheit auf, die zentral von einer Flugbesatzung ansteuerbar ist.

Grundsätzlich wäre es auch denkbar, dass das zu verriegelnde Flugzeugsitzelement 14g als ein in einer Armlehne gelagerter Privacy-Divider, eine Overheadbin, oder ein Rückenlehneninsert ausgebildet ist.

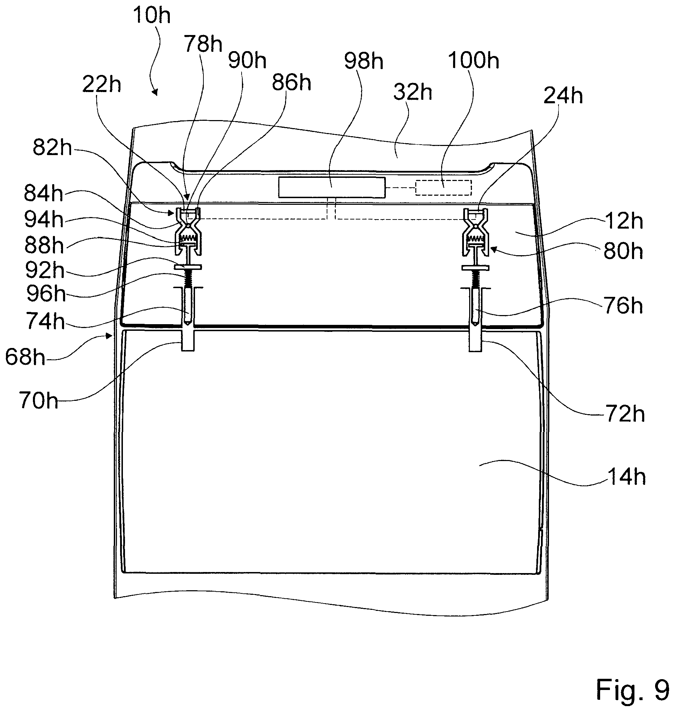

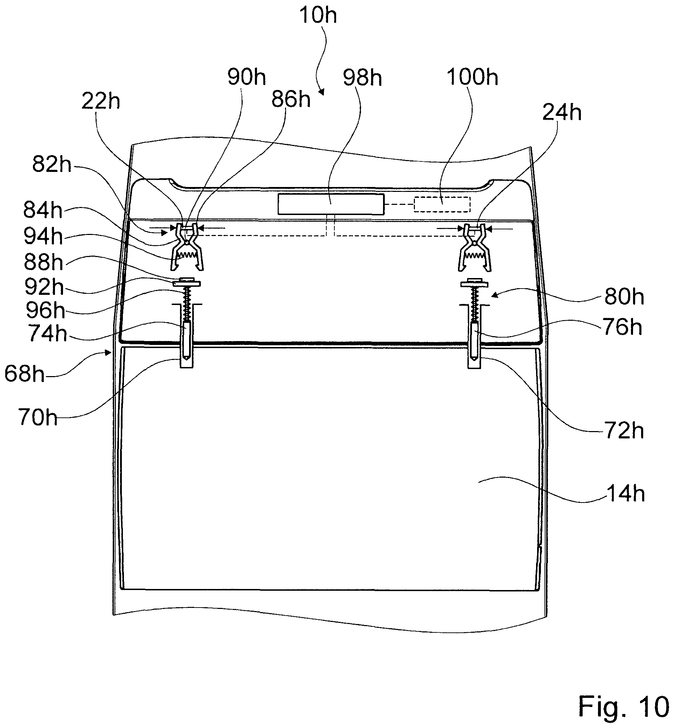

Die Figuren 9 und 10 zeigen eine Flugzeugsitzvorrichtung in einem dritten Ausführungsbeispiel. Die Flugzeugsitzvorrichtung ist Teil eines schematisch dargestellten Flugzeugsitzes. Der Flugzeugsitz weist eine Rückenlehne 32h auf. Die Rückenlehne 32h umfasst ein Panel 12h, das eine Rückseite der Rückenlehne 32h ausbildet. Der Flugzeugsitz umfasst weiter ein als Esstisch ausgebildetes Flugzeugsitzelement 14h. Das als Esstisch ausgebildete Flugzeugsitzelement 14h ist zumindest zwischen einer Verstaustellung und einer Gebrauchsstellung verschwenkbar an der Rückenlehne 32h gelagert. In der Verstaustellung ist das Flugzeugsitzelement 14h an die Rückenlehne 32h angeklappt. In einem angeklappten Zustand liegt eine obere Kante des als Esstisch ausgebildeten Flugzeugsitzelements 14h vorzugsweise an einem Vorsprung des Panels 12h der Rückenlehne 32h an. Dabei ist es insbesondere denkbar, dass das als Esstisch ausgebildete Flugzeugsitzelement 14h zur Überführung in die Verstaustellung zusammengeklappt werden muss, wodurch die in dem angeklappten Zustand obere Kante von Kanten zweier zueinander schwenkbar angeordneter Esstischhälften gebildet ist.

Die Flugzeugsitzvorrichtung weist eine Verriegelungseinheit 68h auf. Die Verriegelungseinheit 68h ist insbesondere als eine Crashverriegelungseinheit ausgebildet. Die Verriegelungseinheit 68h ist dazu vorgesehen, das Flugzeugsitzelement 14h in einem Crashfall in seiner Verstaustellung zu verriegeln und zu sichern. Die als Crashverriegelungseinheit ausgebildete Verriegelungseinheit 68h ist insbesondere dazu vorgesehen, eine zu einer normalen Verriegelung des Flugzeugsitzelements zusätzliche Verriegelung in einem Crashfall bereitzustellen. Die als Crashverriegelungseinheit ausgebildete Verriegelungseinheit 68h ist dazu vorgesehen, das als Esstisch ausgebildete Flugzeugsitzelement 14h in einem Crashfall zusätzlich zu sichern. Durch die zusätzliche Sicherung soll insbesondere ein ungewolltes Herausklappen des als Esstisch ausgebildeten Flugzeugsitzelements 14h verhindert werden, wodurch insbesondere ein Verletzungsrisiko für einen Passagier verringert werden kann. Auch wenn in dem Folgenden lediglich eine Verriegelung eines als Esstisch ausgebildeten Flugzeugsitzelements 14h näher beschrieben ist, so ist das System auch zur Verriegelung anderer Flugzeugsitzelemente denkbar, wie insbesondere zur Verriegelung eines als Beinauflage ausgebildeten Flugzeugsitzelements oder eines als Sitzbodenverlängerung ausgebildeten Flugzeugsitzelements.

Im Bereich der oberen Kante des als Esstisch ausgebildeten Flugzeugsitzelements 14h weist die Verriegelungseinheit 68h zwei Verriegelungselemente 70h, 72h auf. Die Verriegelungselemente 70h, 72h sind als Verriegelungsaufnahmen ausgebildet. Die Verriegelungselemente 70h, 72h sind dazu vorgesehen, dass zur Verriegelung des Flugzeugsitzelements 14h in einem Crashfall, wenn das Flugzeugsitzelement 14h in seiner Verstaustellung angeordnet ist, Formschlusselemente formschlüssig in sie eingreifen. Grundsätzlich ist es auch denkbar, dass die Verriegelungselemente 70h, 72h an anderen Positionen an dem als Esstisch ausgebildeten Flugzeugsitzelement 14h angeordnet sind, beispielsweise insbesondere an Seitenbereichen oder an einer unteren Kante.

Die Verriegelungseinheit 68h weist eine Funktionseinheit 20h auf. Die Funktionseinheit 20h ist insbesondere zur zusätzlichen Verriegelung des Flugzeugsitzelements 14h in einem Crashfall in der Verstaustellung vorgesehen. Die Funktionseinheit 20h umfasst zwei Verriegelungselemente 74h, 76h, die zwischen zwei Stellungen verstellbar sind. Die Verriegelungselemente 74h, 76h sind in der Rückenlehne 32h, insbesondere in dem Panel 12h der Rückenlehne 32h, angeordnet. Die Verriegelungselemente 74h, 76h sind linear verschiebbar in dem Panel 12h angeordnet. In einer Entriegelstellung sind die Verriegelungselemente 74h, 76h in das Panel 12h eingefahren. In einer Verriegelstellung ragen die Verriegelungselemente 74h, 76h aus dem Panel 12h heraus und sind dabei insbesondere so angeordnet, dass sie in die Verriegelungselemente 70h, 72h, die in dem Flugzeugsitzelement 14h angeordnet sind, eingreifen, wenn das Flugzeugsitzelement 14h in seiner Verstaustellung angeordnet ist. Grundsätzlich ist es auch denkbar, dass die Funktionseinheit 20h eine andere Anzahl an Verriegelungselementen 74h, 76h aufweist. Die Verriegelungseinheit 68h würde eine entsprechende Anzahl an korrespondierend ausgebildeten, als Verriegelungsaufnahmen ausgebildete, Verriegelungselemente 70h, 72h aufweisen.

Die Funktionseinheit 20h weist für jedes der Verriegelungselemente 74h, 76h eine Halteeinheit 78h, 80h auf. Die beiden Halteeinheiten 78h, 80h sind im Wesentlichen gleich ausgebildet, weswegen im Folgenden lediglich die eine Halteeinheit 78h näher beschrieben werden soll. Die Halteeinheit 78h weist ein Halteelement 82h auf. Das Halteelement 82h ist dazu vorgesehen, das Verriegelungselement 74h in einem Normalbetriebszustand in seiner Entriegelstellung zu halten. Das Halteelement 82h weist zwei zueinander schwenkbare Haltearme 84h, 86h auf. Die Haltearme 84h, 86h sind scherenartig gelenkig miteinander verbunden. Die Haltearme 84h, 86h sind über eine zwischen ersten, unteren Enden der Haltearme 84h, 86h und zweiten, oberen Enden der Haltearme 84h, 86h angeordnete Lagerstelle 90h schwenkbar miteinander verbunden. Die Haltearme 84h, 86h bilden zusammen in einer Haltestellung an ihren ersten, unteren Enden einen Haltebereich aus, in dem das Verriegelungselement 74h formschlüssig gehalten werden kann. An den ersten unteren Bereichen weisen die Haltearme 84h, 86h jeweils einen nach innen gerichteten Haken auf. Das Verriegelungselement 74h weist an einer oberen, dem Flugzeugsitzelement 14h abgewandten Seite einen Haltebereich 88h aus, der in einer Entriegelstellung formschlüssig mit den Haltearmen 84h, 86h gekoppelt ist. In der Haltestellung sind die Haltearme 84a, 86a vorzugsweise im Wesentlichen parallel zueinander ausgerichtet (vgl. Figur 9). Die Halteeinheit 78h umfasst ein Federelement 94h. Das Federelement 94h ist dazu vorgesehen, die Haltearme 84h, 86h in ihrer Haltestellung zu halten. Das Federelement 94h ist in einem unteren Bereich der Haltearme 84h, 86h, auf der dem Haltebereich zugewandten Seite der Haltearme 84h, 86h angeordnet. Das Federelement 94h ist als ein Zugfederelement ausgebildet, das dazu vorgesehen ist, eine Federkraft auf die Haltearme 84h, 86h auszuüben, die die Haltearme 84h, 86h an ihrem unteren Ende aufeinander zu zieht. Das Federelement 94h ist vorzugsweise als eine Spiralfeder ausgebildet.

Die Halteeinheit 78h ist dazu vorgesehen, das Verriegelungselement 74h in einer Freigabestellung freizugeben. In der Freigabestellung der Halteeinheit 78h kann das Verriegelungselement 74h aus seiner Entriegelstellung in seine Verriegelstellung gebracht werden, in der es das als Esstisch ausgebildete Flugzeugsitzelement 14h verriegelt und in seiner Verstaustellung sichert. Zur Erreichung der Freigabestellung werden die Haltearme 84h, 86h aus ihrer Haltestellung verschwenkt, in dem insbesondere obere Enden der Haltearme 84h, 86h aufeinander zu, und die unteren Enden, an denen die Haltearme 84h, 86h den Haltebereich ausbilden, auseinander bewegt werden. Dies geschieht insbesondere dadurch, dass die Haltearme 84h, 86h, über die Lagerstelle 90 zueinander verschwenkt werden.

Die Funktionseinheit 20h weist je Halteeinheit 78h, 80h ein ansteuerbares Formgedächtniselement 22h, 24h auf. Die ansteuerbaren Formgedächtniselemente 22h, 24h sind jeweils dazu vorgesehen, die entsprechende Halteeinheit 78h, 80h von ihrer Haltestellung in ihre Freigabestellung zu verstellen. Das ansteuerbare Formgedächtniselement 22h der ersten Halteeinheit 78h ist dazu vorgesehen, die Haltearme 84h, 86h zu betätigen, insbesondere zueinander zu verschwenken. Das Formgedächtniselement 22h ist insbesondere an einem oberen Ende der Haltearme 84h, 86h angeordnet. Das Formgedächtniselement 22h verbindet die Haltearme 84h, 86h an ihrem oberen Ende miteinander. Das Formgedächtniselement 22h ist dazu vorgesehen, dass es sich bei einer Ansteuerung, also insbesondere bei einer Bestromung bzw. bei einer Zufuhr von thermischer Energie in seiner Form verändert, insbesondere verkürzt. Das Formgedächtniselement 22h ist vorzugsweise insbesondere dazu vorgesehen, in einem bestromten Zustand die oberen Enden der Haltearme 84h, 86h aufeinander zu zubewegen. Das Formgedächtniselement 22h ist insbesondere dazu vorgesehen, die Haltearme 84h, 86h gegen die Federkraft des Federelements 94h zu verschwenken. Durch das Verschwenken der Haltearme 84h, 86h durch das Formgedächtniselement 22h öffnet sich der an den unteren Enden der Haltearme 84h, 86h gebildete Haltebereich und gibt das Verriegelungselement 74 frei. Dadurch kann das Verriegelungselement 74h von seiner Entriegelstellung in seine Verriegelstellung gebracht werden. Grundsätzlich ist es auch denkbar, dass die Halteeinheit 78h auf eine andere, dem Fachmann als sinnvoll erscheinende Weise ausgebildet ist, und von dem Formgedächtniselement 22h von der Haltestellung in die Freigabestellung gebracht werden kann.

Die Halteeinheit 78h weist ein Anschlagselement 92h auf. Das Anschlagselement 92h ist dazu vorgesehen, dass das Verriegelungselement 74h mit seinem Haltebereich 88h in der Verriegelstellung an dem Anschlagselement 92h anschlägt. Das Anschlagselement 92h ist insbesondere fest mit dem Panel 12h verbunden. Das Anschlagselement 92h weist vorzugsweise einen Lagerbereich auf, durch den das Verriegelungselement 74h mit einem Teilbereich geführt ist. Es ist denkbar, dass der Lagerbereich von einem Durchgangsloch gebildet ist, durch das das Verriegelungselement 74h geführt ist. Die Halteeinheit 78h weist ein Federelement 96h auf. Das Federelement 96h ist dazu vorgesehen, eine Bewegung des Verriegelungselements 74h von seiner Entriegelstellung in die Verriegelstellung zu unterstützen. Das Federelement 96h ist zwischen dem Anschlagselement 92h und einem unteren Ende des Verriegelungselements 74h angebracht. Das Federelement 96h übt eine nach unten, in Richtung des Verriegelungselements 70 des als Esstisch ausgebildeten Flugzeugsitzelements 14h wirkende Federkraft auf das Verriegelungselement 74h aus. In einer Freigabestellung drückt das Federelement 96h das Verriegelungselement 74h in das Verriegelungselement 70h des Flugzeugsitzelements 14h. Dadurch kann insbesondere eine besonders vorteilhaft schnelle Verriegelung in einem Crashfall erreicht werden. In der Verriegelstellung greifen die Verriegelungselemente 74h, 76h, nachdem sie von der entsprechenden Halteeinheit 78h, 80h freigegeben wurden, in die Verriegelungselemente 70h, 72h des als Esstisch ausgebildeten Flugzeugsitzelements 14h ein und verriegeln diesen sicher an der Rückenlehne 32h (vgl. Fig. 9).

Die Funktionseinheit 20h weist zur Steuerung der ansteuerbaren Formgedächtniselemente 22h, 24h eine Steuereinheit 98h auf. Die Steuereinheit 98h ist dazu vorgesehen, die Formgedächtniselemente 22h, 24h in einem erkannten Crashfall anzusteuern und die Halteeinheiten 78h, 80h so von ihrer Haltestellung in ihre Freigabestellung zu überführen. Unter einem Crashfall soll hierbei insbesondere eine Situation verstanden werden, in der auf den Flugzeugsitz oder die Rückenlehne eine Beschleunigungskraft wirkt, die über eine in einem Normalbetrieb wirkende Maximalbeschleunigung hinausgeht. Zur Erfassung eines Crashfalls weist die Funktionseinheit 20h ein Sensorelement 100h, vorzugsweise insbesondere einen Beschleunigungssensor auf, dessen Sensorsignale von der Steuereinheit 98h verarbeitet werden. Grundsätzlich ist es auch denkbar, dass das Sensorelement 100h als ein anderes dem Fachmann als sinnvoll erscheinendes Sensorelement ausgebildet ist, wie beispielsweise als ein mechanisches Sensorelement, ein taktiles Sensorelement, ein in dem als Esstisch ausgebildeten Flugzeugsitzelement 14h angeordneter Dehnungsmessstreifen oder als ein Annäherungssensor. Das Sensorelement 100h ist in der Rückenlehne 32h angeordnet. Grundsätzlich ist es auch denkbar, dass die Steuereinheit 98h und/oder das Sensorelement 100h zentralisiert von einer Flugzeugsteuerungseinheit gebildet sind, die mehrere Flugzeugsitze gleichzeitig ansteuert. Grundsätzlich ist es ebenso denkbar, dass das Sensorelement 100h batteriebetrieben mit einem Kondensator ausgebildet ist.

### Bezugszeichen

- 10: Flugzeugsitzmodul
- 12: Panel
- 14: Flugzeugsitzelement
- 16: Bildschirmverstelleinheit
- 18: Bedieneinheit
- 20: Funktionseinheit
- 22: Formgedächtniselement
- 24: Formgedächtniselement
- 26: Formgedächtniselement
- 28: Formgedächtniselement
- 30: Verstellelement
- 32: Rückenlehne
- 34: Verriegelungseinheit
- 36: Verriegelungselement
- 38: Verriegelungselement
- 40: Verriegelungselement
- 42: Verriegelungselement
- 44: Verriegelungselement
- 46: Verriegelungselement
- 50: Serviceöffnung
- 52: Aufständereinheit
- 54: Sitzboden
- 56: Aktuatorelement
- 58: Verriegelungselement
- 60: Armlehne
- 62: Esstisch
- 64: Bedienelement
- 66: Stauraum
- 68: Verriegelungseinheit
- 70: Verriegelungselement
- 72: Verriegelungselement
- 74: Verriegelungselement
- 76: Verriegelungselement
- 78: Halteeinheit
- 80: Halteeinheit
- 82: Halteelement
- 84: Haltearm
- 86: Haltearm
- 88: Haltebereich
- 90: Lagerstelle
- 92: Anschlagselement
- 94: Federelement
- 96: Federelement
- 98: Steuereinheit
- 100: Sensorelement

## Patentansprüche

1. Flugzeugsitzvorrichtung mit zumindest einer Funktionseinheit (20a; 20b; 20c; 20d; 20e; 20g; 20h), die zumindest zu einer Verriegelung, einer Steuerung und/oder einer Bewegung wenigstens eines Flugzeugsitzelements (14a; 14b; 14c; 14e; 14g; 14h) vorgesehen ist, wobei die Funktionseinheit (20a; 20b; 20c; 20d; 20e; 20g; 20h) wenigstens ein ansteuerbares Formgedächtniselement (22a, 24a, 26a, 28a; 22b, 24b, 26b; 22c; 22d; 22e; 22g; 22h, 24h) umfasst, **dadurch gekennzeichnet, dass** die Funktionseinheit (20b; 20c) zumindest ein zwischen zumindest zwei Stellungen verfahrbares Verriegelungselement (42b, 44b, 46b; 42c, 44c) aufweist, das zumindest im Wesentlichen durch das wenigstens eine ansteuerbare Formgedächtniselement (22b, 24b, 26b; 22c) verstellbar ist, wobei das wenigstens eine Formgedächtniselement (22b, 24b, 26b; 22c) zur Verriegelung des als Esstisch ausgebildeten Flugzeugsitzelements (14b; 14c) vorgesehen ist.

2. Flugzeugsitzvorrichtung nach Anspruch 1, **dadurch gekennzeichnet, dass** die Funktionseinheit (20a) zumindest einen Teil einer Bildschirmverstelleinheit (16a) ausbildet.

3. Flugzeugsitzvorrichtung nach einem der vorhergehenden Ansprüche, **dadurch gekennzeichnet, dass** die Funktionseinheit (20a) wenigstens ein Verstellelement (30a) aufweist, das zumindest im Wesentlichen durch das wenigstens eine ansteuerbare Formgedächtniselement (22a, 24a, 26a, 28a) verstellbar ist.

4. Flugzeugsitzvorrichtung nach einem der vorhergehenden Ansprüche, **dadurch gekennzeichnet, dass** die Funktionseinheit (20b, 20d, 20e) zumindest einen Teil einer Verriegelungseinheit ausbildet.

5. Flugzeugsitzvorrichtung nach einem der vorhergehenden Ansprüche, **dadurch gekennzeichnet, dass** das wenigstens eine ansteuerbare Formgedächtniselement (22c) als ein Verriegelungselement ausgebildet ist, das zumindest in einem Betriebszustand dazu vorgesehen ist, ein anderes Element, wie insbesondere ein korrespondierend ausgebildetes Verriegelungselement (34c), zu blockieren und/oder zu verriegeln.

6. Flugzeugsitzvorrichtung nach einem der vorhergehenden Ansprüche, **dadurch gekennzeichnet, dass** die Funktionseinheit (20d) zumindest als ein Teil eines Sitzverstellmechanismus ausgebildet ist.

7. Flugzeugsitzvorrichtung nach einem der vorhergehenden Ansprüche, **dadurch gekennzeichnet, dass** das Formgedächtniselement (22d) dazu vorgesehen ist, zumindest in einem Betriebszustand wenigstens ein Aktuatorelement (56d) zu betätigen.

8. Flugzeugsitzvorrichtung nach einem der vorhergehenden Ansprüche, **gekennzeichnet durch** wenigstens eine Bedieneinheit (18b), über die das wenigstens eine Formgedächtniselement (22b, 24b, 26b) ansteuerbar ist, die wenigstens ein Bedienelement (64b) umfasst, das vorzugsweise als berührungsloser Sensor ausgebildet ist.

9. Flugzeugsitzvorrichtung nach einem der vorhergehenden Ansprüche, **dadurch gekennzeichnet, dass** die Funktionseinheit (20h) dazu vorgesehen ist, das Flugzeugsitzelement (14h) in einem Crashfall zu verriegeln.

10. Flugzeugsitz mit einer Flugzeugsitzvorrichtung nach einem der vorhergehenden Ansprüche 1 bis 9.

## Claims

1. Airplane seat device
with at least one functional unit (20a; 20b; 20c; 20d; 20e; 20g; 20h) which is configured at least for a locking, a controlling and/or a movement of at least one airplane seat element (14a; 14b; 14c; 14e; 14g; 14h),
the functional unit (20a; 20b; 20c; 20d; 20e; 20g; 20h) comprising at least one actuatable shape-memory element (22a, 24a, 26a, 28a; 22b, 24b, 26b; 22c; 22d; 22e; 22g; 22h, 24h),
**characterised in that** the functional unit (20b; 20c) comprises at least one locking element (42b, 44b, 46b; 42c, 44c) which is traversable between at least two positions and is adjustable at least substantially by the at least one actuatable shape-memory element (22b, 24b, 26b; 22c),
the at least one shape-memory element (22b, 24b, 26b; 22c) being configured for a locking of the airplane seat element (14b; 14c) that is embodied as a dining table.

2. Airplane seat device according to claim 1,
**characterized in that** the functional unit (20a) forms at least a portion of a screen adjusting unit (16a).

3. Airplane seat device according to one of the preceding claims,
**characterised in that** the functional unit (20a) comprises at least one adjustment element (30a), which is adjustable at least substantially by the at least one actuatable shape-memory element (22a, 24a, 26a, 28a).

4. Airplane seat device according to one of the preceding claims,
**characterised in that** the functional unit (20b, 20d, 20e) forms at least a portion of a locking unit.

5. Airplane seat device according to one of the preceding claims,
**characterised in that** the at least one actuatable shape-memory element (22c) is realized as a locking element, which is at least in an operating state configured for blocking and/or locking another element, like in particular a correspondingly formed locking element (34c).

6. Airplane seat device according to one of the preceding claims,
**characterised in that** the functional unit (20d) is realized at least as a portion of a seat-adjustment mechanism.

7. Airplane seat device according to one of the preceding claims,
**characterised in that** the shape-memory element (22d) is configured, at least in an operating state, to operate at least one actuator element (56d).

8. Airplane seat device according to one of the preceding claims,
**characterised by** at least one operating unit (18b) via which the at least one shape-memory element (22b, 24b, 26b) is actuatable,
said operating unit (18b) comprising at least one operating element (64b), which is preferably embodied as a contact-free sensor.

9. Airplane seat device according to one of the preceding claims,
**characterised in that** the functional unit (20h) is configured for locking the aircraft seat element (14h) in case of a crash.

10. Airplane seat with an airplane seat device according to one of the preceding claims 1 to 9.

## Revendications

1. Dispositif de siège d'avion
avec au moins une unité fonctionnelle (20a ; 20b ; 20c ; 20d ; 20e ; 20g ; 20h) qui est destinée pour un verrouillage, une commande et/ou un mouvement d'au moins un élément de siège d'avion (14a ; 14b ; 14c ; 14e ; 14g ; 14h),
l'unité fonctionnelle (20a ; 20b ; 20c ; 20d ; 20e ; 20g ; 20h) comprenant au moins un élément à mémoire de forme (22a, 24a, 26a, 28a ; 22b, 24b, 26b ; 22c ; 22d ; 22e ; 22g ; 22h, 24h) actionnable,
**caractérisé en ce que** l'unité fonctionnelle (20b ; 20c) comprend au moins un élément à verrouillage (42b, 44b, 46b ; 42c, 44c) qui est déplaçable entre au moins deux positions, qui est au moins sensiblement ajustable par l'au moins un élément à mémoire de forme (22b, 24b, 26b ; 22c) actionnable,
l'au moins un élément à mémoire de forme (22b, 24b, 26b ; 22c) étant destiné pour le verrouillage de l'élément de siège d'avion (14b ; 14c) qui est réalisé comme table à manger.

2. Dispositif de siège d'avion selon la revendication 1,
**caractérisé en ce que** l'unité fonctionnelle (20a) forme au moins une partie d'une unité à réglage d'écran (16a).

3. Dispositif de siège d'avion selon l'une des revendications précédentes,
**caractérisé en ce que** l'unité fonctionnelle (20a) comprend au moins un élément de réglage (30a) qui est au moins sensiblement ajustable par l'au moins un élément à mémoire de forme (22a, 24a, 26a, 28a) actionnable.

4. Dispositif de siège d'avion selon l'une des revendications précédentes,
**caractérisé en ce que** l'unité fonctionnelle (20b, 20d, 20e) forme au moins une partie d'une unité à verrouillage.

5. Dispositif de siège d'avion selon l'une des revendications précédentes,
**caractérisé en ce que** l'au moins un élément à mémoire de forme (22c) actionnable est réalisé comme élément à verrouillage et est destiné, au moins en état opératif, à bloquer et/ou verrouiller un autre élément, comme en particulier un élément à verrouillage (34c) en forme correspondante.

6. Dispositif de siège d'avion selon l'une des revendications précédentes,
**caractérisé en ce que** l'unité fonctionnelle (20d) est réalisée au moins comme partie d'un mécanisme à réglage de siège.

7. Dispositif de siège d'avion selon l'une des revendications précédentes,
**caractérisé en ce que** l'élément à mémoire de forme (22d) est destiné, au moins en état opératif, pour un actionnement d'au moins un élément actuateur (56d).

8. Dispositif de siège d'avion selon l'une des revendications précédentes,
**caractérisé par** au moins une unité de maniement (18b) par le biais de laquelle l'au moins un élément à mémoire de forme (22b, 24b, 26b) peut être actionné, ladite unité de maniement (18b) comprenant au moins un élément de maniement (64b) qui est préférablement réalisé comme capteur sans-contact.

9. Dispositif de siège d'avion selon l'une des revendications précédentes,
**caractérisé en ce que** l'unité fonctionnelle (20h) est destinée à verrouiller l'élément de siège d'avion (14h) en cas d'un crash.

10. Siège d'avion avec un dispositif de siège d'avion selon l'une des revendications précédentes 1 à 9.
